# EUROPEAN PATENT SPECIFICATION

(11) **EP 3 883 143 B1**
(45) Date of publication and mention of the grant of the patent: **03.12.2025**
(21) Application number: 20163859.0
(22) Date of filing: 18.03.2020
(51) Int. Cl.: H04B 7/185

(54) **SPACECRAFT FOR AND METHOD OF PROVIDING ANALYZED EARTH OBSERVATION DATA, AND EARTH OBSERVATION SYSTEM**
RAUMFAHRZEUG UND VERFAHREN ZUR BEREITSTELLUNG VON ANALYSIERTEN ERDBEOBACHTUNGSDATEN UND ERDBEOBACHTUNGSSYSTEM
ENGIN SPATIAL ET PROCÉDÉ PERMETTANT DE FOURNIR DES DONNÉES ANALYSÉES D'OBSERVATION DE LA TERRE ET SYSTÈME D'OBSERVATION DE LA TERRE

(43) Date of publication of application: 22.09.2021
(73) Proprietor: Airbus Defence and Space GmbH, 82024 Taufkirchen (DE)
(72) Inventor: Verma, Amit, 82024 Taufkirchen (DE)
(74) Representative: LKGLOBAL Lorenz & Kopf Patentanwalt Attorney at Law PartG mbB

(56) References cited:
- CN-A- 110 505 005
- US-A1- 2017 250 751

## Description

### Field of the invention

The invention relates to on-board data processing of earth observation data. In particular, the invention relates to a spacecraft for and a method of providing analyzed earth observation data, as well as an earth observation system.

### Technical Background

Nowadays, different earth observation techniques exist which are adapted to determine a state or characteristics of a region on the earth's surface. For example, geospatial analysis is performed by ground processing units in so-called ground stations after raw data has been received by different earth observation systems, like satellites, etc. A common approach of performing geospatial analysis is to first task a satellite located above a particular area and wait until the satellite passes over that area in the correct attitude and collects earth observation data. This data is then relayed back to the respective ground station when the satellite is in within a line of sight of that base station. The data is then optionally transferred from the base station to a computing facility where the data is pre-processed and analyzed, i.e. automated algorithms are performed on the data to obtain insights.

However, geospatial data is typically very large in volume and satellites are typically limited in their storage capacity to store large amounts of geospatial data. Furthermore, receiving data from satellites through the ground station is often expensive and time consuming. **In** particular, before receiving data from the satellite, the satellite must pass over the ground station to transmit the data thereto, i.e. there must be a line of sight between the satellite and the ground station. During the time period the satellite is in line of sight to the base station, there is a limited downlink time which might not be sufficient to transfer all the collected data, thus requiring to establish another downlink of the satellite to the ground station which is also time consuming. Thus, operating such a network of satellites and ground stations is expensive.

Summarizing, there is a considerable delay and bottleneck when geospatial analytics has to be performed on earth observation data from satellites. This limits the technical and commercial scalability of the earth observation approach and limits the potential applications.

US 2018 / 0 167 136 A1 describes a method for communication between a ground terminal on the earth's surface and a satellite, wherein the ground terminal and a radio terminal of the satellite are set up for IP-based communication. The communication proceeds such that one or more IP-based protocols are used with the interposition of a space-based internet system to transmit control commands for one or more modules of the satellite from the ground terminal to the radio terminal, which receives the control commands by radio from the space-based internet system and forwards them to the module(s).

US 2016 / 0 325 856 A1 describes a telecommunications satellite that is stabilized on three axes includes a set of dissipative equipment constituting a payload of the satellite. The satellite includes support data transmission antennas and is substantially parallelepipedal in shape with the panels forming two opposite faces, east and west faces. The panels form two additional opposite faces, north and south faces, and include radiator surfaces on their external faces. The radiator surfaces are configured to cool the electronic equipment of the satellite.

US 2017/0250751 A describes smart satellite system that is capable of decision making and prioritization on the fly to optimize the use of downlink bandwidth to deliver prioritized data based upon opportunity and the resources of available payloads. By providing a satellite system with substantial processing power and a level of autonomy, the satellite is able to make decisions about capturing imagery data, including image data processing, object detection, image segmentation, and re-orientation of the satellite based upon the opportunity, from the satellite's perspective, for capturing image data of areas or objects of interest. Through the use of machine learning and in-orbit image analysis, the satellite may transmit only a subset of the captured images, portions of the captured images, or the result of image analysis, thereby efficiently using the downlink communication channel.

### Summary of the invention

It may be seen as an object of the invention to improve distribution of data processing of a satellite system.

A spacecraft and a method according to the features of the independent claims are provided. Further embodiments of the invention are evident from the dependent claims and from the following description.

According to an aspect of the invention, a spacecraft for providing analyzed earth observation data is provided. The spacecraft comprises a communication unit configured to receive a request from a ground station, wherein the request is representative for, i.e. indicates, a type of analyzed earth observation data to be provided. The spacecraft further comprises a storage unit configured to store a first processing algorithm involving a machine-learning algorithm. The spacecraft further comprises a processing unit configured to obtain raw data being representative for a state of an area of interest on an earth's surface. The processing unit is configured to process the obtained raw data using the first processing algorithm in order to determine the analyzed earth observation data to be provided in response to receiving the request from the ground station. The communication unit is configured to send the analyzed earth observation data to the ground station.

Such a data processing on-board the spacecraft considerably reduces the amount of data to be transmitted via a communications link between the spacecraft and the ground station in order to provide analyzed earth observation data to the ground station. **In** other words, the spacecraft, which is preferably a satellite, performs the analysis of sensed raw data completely or at least in part on-board the spacecraft such that already analyzed earth observation data can be sent to the ground station where this data can be forwarded to different service providers. **In** order to ensure this on-board processing of raw data on the spacecraft, the spacecraft itself stores at least a suitable processing algorithm involving a machine-learning algorithm that constitutes the basis for the on-board processing.

The advantage of this on-board processing and analysis using the stored processing algorithm using a stored machine-learning algorithm is that the amount of data to be transferred between the spacecraft and the ground station can be reduced. Since the data processing and analysis is performed on-board, data necessary to determine the analyzed earth observation data can be distinguished from data that is not necessary to determine the analyzed earth observation. This distinguishing can be performed on-board the spacecraft. Thus, only the result, i.e. the analyzed data, is sent to the ground station which typically requires less data volume when compared to a scenario in which all sensed raw data is sent from the spacecraft to the ground station for processing and analysis.

In other words, the invention provides performing an on-demand geospatial analysis on-board the spacecraft so that there is no need to transfer large volumes of raw data from the spacecraft to the earth. With this approach, there may be only the necessity to transmit those calculation models, processing algorithms including machine-learning models to the spacecraft which are required to fulfil a specific task, i.e. to provide specific earth observation data. The on-board processing unit may therefore perform data pre-processing and also run artificial intelligence (AI) algorithms and machine-learning (ML) algorithms. In the end, only the earth observation results or insights, i.e. the analyzed earth observation data, are sent back to the ground station on earth.

In an example scenario, the request received by the communication unit of the spacecraft specifies the number of cars in a certain city as type of analyzed earth observation data to be provided. The counting algorithm for counting the cars and information about the area of interest, i.e. the city, on the earth's surface are sent to the spacecraft. The only data which, after processing on-board the spacecraft, is sent to the ground station is the number of cars in the city which represents the analyzed earth observation data. In contrast, the raw images of said city are not required to be relayed back to the ground station since these raw images were already processed on-board the spacecraft. Consequently, the amount of data to be sent from the spacecraft to the ground station is considerably reduced. Typically, the AI and/or ML models and algorithms have a storage size of some megabytes. The result, i.e. the number of cars in the city, is of considerably less size, as compared to the raw images that typically incorporate several gigabytes. This allows the spacecraft to just store the end result and relay it quickly back to the ground station on earth.

The term "analyzed earth observation data" may be understood as data which was at least once processed by a processing algorithm, preferably a processing algorithm involving a machine-learning algorithm. Therefore, it is possible that one or more calculations have been performed on the raw data in order to obtain analyzed earth observation data. The calculations may include the application of mathematical models and/or statistical models on the raw data. The analyzed earth observation data may be the result of such calculations and may be used by a service provider as an end result or may be further processed by the service provider.

A "processing algorithm" may be understood as a sequence of computer-implemented instructions used to perform processing on the raw data. Several algorithmic operations define a workflow which may be performed on this raw data. The processing algorithm may include a machine-learning algorithm.

A "machine-learning algorithm" may be understood as a statistical model that is established based on training data, for example the raw data and/or training data sent from the base station to the spacecraft. Based on this training data, calculation procedures and further algorithms can be learned, e.g. generated, which are then applied to the raw data in order to determine the analyzed earth observation data. In other words, the processing unit of the spacecraft may be able to generate by itself algorithms which are suitable and adapted to determine a requested type of analyzed earth observation data.

However, in the basic configuration, the storage unit stores at least the first processing algorithm involving the machine-learning algorithm which is used to process the raw data, wherein the raw data may represent a state, a feature and/or a characteristic of an area of interest on the earth's surface.

The "area of interest" may be a spatially limited region on the ground, i.e. on the earth's surface, wherein it is possible that this region constitutes a two-dimensional extension, for example a surface area on the earth, or a three-dimensional space on and above the earth's surface, e.g., including an air space covering a couple meters or kilometers above the earth's surface.

The "state" may indicate an occurrence or number of occurrences of a specified item or device on the earth's surface. For example, the state may include 1) the number of cars in a particular area as a measure of economic activity; 2) the number of oil rigs over a particular area to estimate oil production; 3) a particular object such as a ship named "X" in a particular area; 4) the number commercial aircrafts on airports; 5) a defense installation on the ground, etc.

By processing the above-mentioned raw data, the processing unit can determine the analyzed earth observation data to be provided to the ground station. This analyzed earth observation data may be dependent on the request initially received by the communication unit. For example, the request identifies that the economic activity of a certain area on the earth's surface is to be analyzed. This triggers the processing unit to obtain raw data, e.g. image data in which, inter alia, the occurrence of cars in that area can be counted or estimated. The first processing algorithm involving the machine-learning algorithm fuse these counting data to determine the economic activity in that area. Then, a value or parameter indicating the economic activity associated with said area is provided as the analyzed earth observation data which is sent from the communication unit of the spacecraft to the ground station. Preferably, no raw data or image data is sent from the communication unit of the spacecraft to the ground station.

According to an embodiment, the communication unit is configured to receive a second processing algorithm, wherein the processing unit is configured to process the obtained raw data using the second processing algorithm in order to determine the analyzed earth observation data to be provided.

Thus, it is possible that the raw data is processed by using more than one algorithm, i.e. by using the first algorithm and the second algorithm, wherein each of them preferably involves a machine-learning algorithm. It is particularly possible, that a plurality of processing algorithms is used to process the raw data in order to determine the analyzed earth observation data. This may depend on the requested type of analyzed earth observation data to be provided by the spacecraft to the ground station. For example, in some cases it may be necessary that the first and the second processing algorithm must be applied to the raw data in order to determine the earth observation data. A sequence of processing algorithms may be referred to as a workflow or workflow definition.

According to another embodiment, the communication unit is configured to receive an update program that is adapted to update the first processing algorithm in order to obtain an updated first processing algorithm and the processing unit is configured to process the obtained raw data using the updated first processing algorithm in order to determine the analyzed earth observation data to be provided.

The update program may be sent from the ground station to the communication unit of the spacecraft. In this manner, the first processing algorithm can be periodically updated or renewed to improve the quality or efficiency of the raw data processing. This procedure may also be applied to the case where several processing algorithms are stored in the storage unit of the spacecraft, such that all or at least some of the stored processing algorithms are periodically updated by respective update programs received by the ground station. In this manner, the processing algorithms can always be adapted to the latest version. It is possible that one or more of the processing algorithms involves a machine-learning algorithm.

It is possible that the communication unit of the spacecraft periodically sends a request to the ground station indicating an update requirement to the ground station which triggers the ground station to send, if available, an update program to the spacecraft.

According to another embodiment, the storage unit is configured to store a plurality of processing algorithms that are adapted to determine different analyzed earth observation data, wherein the processing unit is configured to select the first processing algorithm from the plurality of processing algorithms based on the received request.

Thus, it is possible to apply the correct processing algorithm to the requested task. If for example, an economic activity of an area on the earth's surface is to be determined, then a counting algorithm for counting different relevant objects in this area is selected by the processing unit in order to deliver the requested result, i.e. the economic activity.

Each stored processing algorithm can therefore be allocated to a specific task to be performed in order to determine the requested analyzed earth observation data.

It is possible that one or more of the plurality of stored processing algorithms involve a machine-learning algorithm. In particular, it may be possible that some and not all of the plurality of processing algorithms involve a machine-learning algorithm.

According to the invention, the request identifies an area of interest on the earth's surface and a predefined processing algorithm to be performed by the processing unit.

In particular, the request may trigger the selection of the predefined processing algorithm among a plurality of different processing algorithms from the storage unit of the spacecraft, which predefined processing algorithm is then applied to process the raw data. The predefined processing algorithm may involve a machine-learning algorithm.

Furthermore, the request indicates the area of interest, i.e. the area for which analyzed earth observation data is to be provided. The request may include spatial and/or geographical coordinates that define the area of interest.

According to the invention, the processing unit is configured to determine whether the predefined processing algorithm is present in the storage unit and the processing unit is configured to receive the predefined processing algorithm from the ground station if it is determined that the predefined processing algorithm is not present in the storage unit.

Thus, if the processing unit cannot find the predefined processing algorithm in the storage unit, this predefined or a suitable corresponding processing algorithm adapted for determining the requested type of earth observation data may be automatically sent from the ground station to the communication unit of the spacecraft, for example upon a request from the spacecraft to the ground station indicating that access to said predefined processing algorithm is required. It is noted that all algorithms described herein may be analytics algorithms as will be further explained in the detailed description of the Figures below.

According to another embodiment, the processing unit is configured to determine whether the raw data being representative for the state of the area of interest on the earth's surface is present in the storage unit.

The raw data may be sensor data obtained by respective sensors on the spacecraft. For example, the raw data may be or comprise image data. The raw data may include physical maps, cartography data and/or real-time image data. Such real-time image data may be obtained by a camera system on-board the spacecraft. Physical maps or cartography data may be stored in the storage unit of the spacecraft. Furthermore, it is possible that the raw data is sent from the ground station to the spacecraft, in particular in such cases where the required raw data is not present on-board the spacecraft or cannot be obtained by the spacecraft. In this case, the communication unit of the spacecraft may send a request to the ground station indicating that access to the raw data is necessary in order to process the analyzed earth observation data. In response to this request, the ground station automatically sends the requested raw data to the communication unit of the spacecraft.

According to another embodiment, the processing unit is configured to control the spacecraft to obtain the raw data being representative for the state of the area of interest on the earth's surface when it is determined that the raw data being representative for the state of the area of interest on the earth's surface is not present in the storage unit.

Controlling the spacecraft may include tasking a detection unit or a sensor unit of the spacecraft to measure or detect the raw data once the satellite passes over the area of interest. The spacecraft preferably operates in a lower earth orbit (LEO).

According to another embodiment, the spacecraft further comprises a detection unit configured to capture the raw data being representative for the state of the area of interest on the earth's surface.

For example, the detection unit may include a camera or camera system and/or a radar or radar system configured to capture images or radar data of the earth's surface.

According to another embodiment, the raw data being representative for the state of the area of interest on the earth's surface comprises image data of at least the area of interest on the earth's surface.

The image data may be captured by the detection unit, be stored in the storage unit, and/or be received from the ground station or directly from another spacecraft or aircraft. In general, all data discussed herein may also be received by the communication unit of the spacecraft from another spacecraft or aircraft.

According to another embodiment, the processing unit is configured to pre-process the obtained raw data by using at least one of ortho-rectification, geo-localization and pan-sharpening.

Ortho-rectification may include the process of correcting optical distortions in a sensed image or in sensed images, the distortions being caused by the perspective of the viewing angle of the sensor unit, e.g. camera, with respect to the ground terrain.

Geo-localization may include the determination of the position, location and/or orientation of an object, for example on the earth's surface, with respect to a reference point.

Pan-sharpening may include merging high-resolution panchromatic and lower resolution multispectral imagery to create a single high-resolution color image.

According to another embodiment, the spacecraft is a satellite.

According to an aspect of the invention, an earth observation system, for example a satellite earth observation system, is provided. The earth observation system comprises a ground station and the spacecraft as described above and below. The ground station stores a plurality of processing algorithms, wherein the ground station is configured to automatically send at least one of the plurality of processing algorithms to the spacecraft based on a determination of the processing unit of the spacecraft that the at least one processing algorithm is not present in the storage unit of the spacecraft and that the at least one processing algorithm is required to determine the analyzed earth observation data on-board the spacecraft.

In other words, if the processing unit of the spacecraft determines that a certain processing algorithm is required to determine the analyzed earth observation data, then the processing unit sends a request, via the communication unit, to the ground station indicating that this certain processing algorithm is required for determining the analyzed earth observation data. In response to this indication, the ground station sends the required certain processing algorithm to the communication unit and then to the processing unit of the spacecraft such that the processing unit can then use the certain processing algorithm to determine the analyzed earth observation data. It is possible that the certain processing algorithm includes a machine-learning algorithm.

According to another aspect of the invention, a method of providing analyzed earth observation data from a spacecraft is provided. In a step of the method, a request from a ground station is received by the spacecraft, wherein the request is representative for a type of analyzed earth observation data to be provided. In another step, a first processing algorithm involving a machine-learning algorithm is stored on the spacecraft. In another step, raw data are obtained by the spacecraft, the raw data being representative for a state of an area of interest on an earth's surface. In another step, the obtained raw data is processed on the spacecraft using the first processing algorithm involving the machine-learning algorithm in order to determine the analyzed earth observation data to be provided in response to receiving the request from the ground station. In another step, the analyzed earth observation data is sent from the spacecraft to the ground station.

It is understood that the above-mentioned method steps may be carried out in the above-listed order.

### Brief description of the drawings

The present invention will hereinafter be described in conjunction with the following drawing figures, wherein like numerals denote like elements, and wherein:
- Fig. 1: shows a spacecraft according to an exemplary embodiment.
- Fig. 2: shows an earth observation system including the spacecraft of Fig. 1, according to an exemplary embodiment.
- Fig. 3: shows an on-board computing unit on the spacecraft of Fig. 1, according to an exemplary embodiment.
- Fig. 4: shows a flow diagram for a method of providing analyzed earth observation data from a spacecraft according to an exemplary embodiment.

### Detailed description of exemplary embodiments

The representations and illustrations in the drawings are schematic and not to scale. A better understanding of the spacecraft and earth observation system described above may be obtained through a review of the illustrations accompanying this application together with a review of the detailed description that follows.

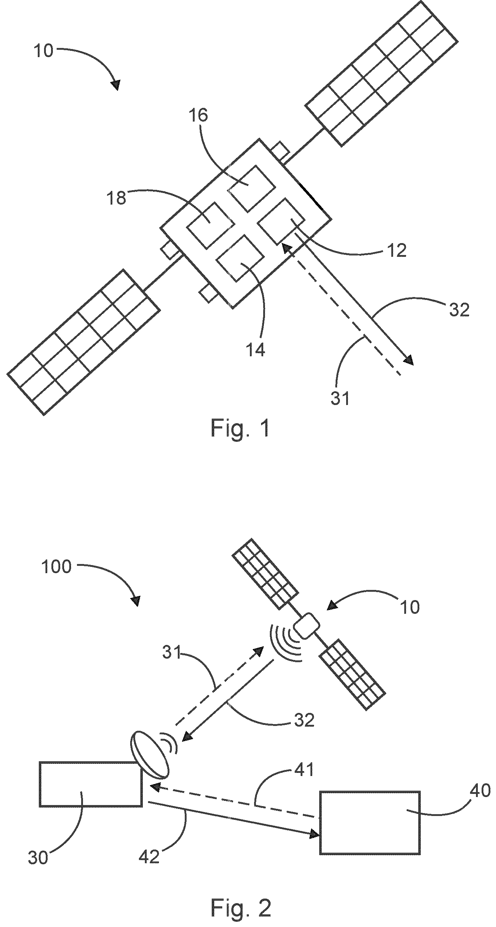

Fig. 1 shows a spacecraft 10, in this case a satellite 10, for providing analyzed earth observation data. The spacecraft 10 comprises a communication unit 12 configured to receive a request 31 from a ground station not shown in Fig. 1. The request 31 is representative for a type of analyzed earth observation data to be provided by the spacecraft 10. The spacecraft 10 comprises a storage unit 14 that stores a first processing algorithm involving a machine-learning algorithm as well as a processing unit 16 configured to obtain raw data being representative for a state of an area of interest on an earth's surface. The raw data is sensed, measured and/or collected by a detection unit 18. This raw data is then forwarded to the processing unit 16 that processes the obtained raw data using the first processing algorithm in order to determine the analyzed earth observation data to be provided in response to receiving the request 31. In the end, the communication unit 12 sends the analyzed earth observation data via communication link 32 to the ground station 30.

Fig. 2 shows an earth observation system 100 comprising a ground station 30 and the spacecraft 10 as described above with respect to Fig. 1. The ground station 30 stores a plurality of processing algorithms and automatically sends at least one of the plurality of processing algorithms to the spacecraft 10 after the processing unit 16 of the spacecraft 10 has determined that the at least one processing algorithm is not present in the storage unit 14 of the spacecraft 10 and that the at least one processing algorithm is required to determine the analyzed earth observation data on-board the spacecraft 10. The ground station 30 is communicatively coupled to a command and control center 40. The command and control center 40 may generate the request, which is provided by the ground station 30 to the spacecraft 10. The command and control center 40 may have access to one or more satellite ground control stations not shown in Fig. 2. The command and control center 40 sends a request 41 to the ground station 30 which then forwards request 31 based on request 41. Requests 31 and 41, which are also referred to as tasking requests 31 and 41, specify the desired earth observation data, i.e. the analyzed earth observation data to be provided by the spacecraft 10. After complete processing of the raw data on-board the spacecraft 10, the resulting analyzed earth observation data is sent from the spacecraft 10 to the ground station via communication link 32. Preferably, the analyzed earth observation data is forwarded via communication link 42 from ground station 30 to command and control center 40. The central command and control center 40 can interact with multiple further ground stations 30 and associated spacecraft 10 (not shown) in the same manner as described with respect to spacecraft 10 of Fig. 2.

The earth observation system 100 provides for a geospatial data processing on-board the spacecraft 10, in particular on satellites and similar spacecraft. This means that geospatial analytics is performed directly on the satellite 10. Geospatial analytics involves running automated artificial intelligence and machine learning algorithms on satellite data, such as the raw data. Some use cases are 1) counting cars in a particular area as a measure of economic activity; 2) counting oil rigs over a particular area to estimate oil production; 3) identifying/finding a particular object such as a ship named "X" in a particular area; 4) counting commercial aircrafts on airports; 5) automatically finding defense installations, etc. The obtained data may be defined as the analyzed earth observation data.

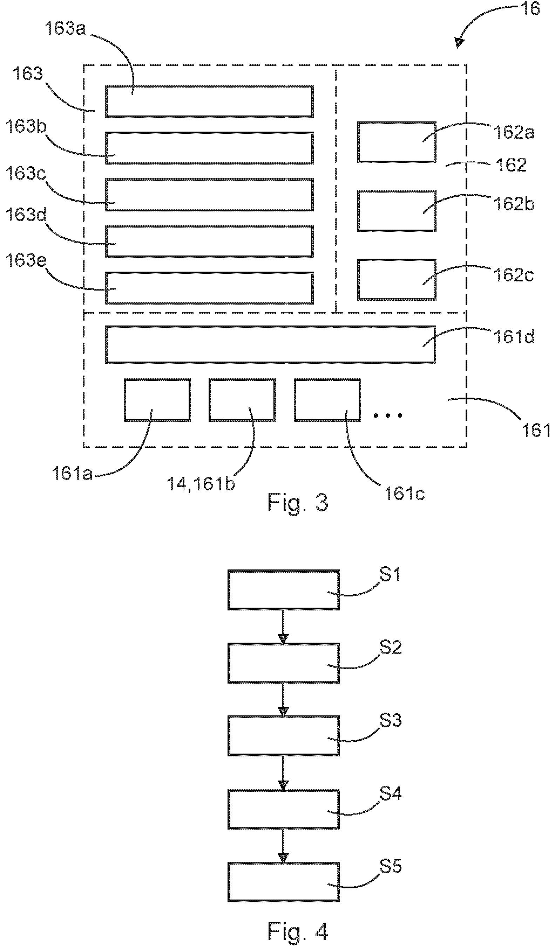

Fig. 3 is a schematic of the process for providing the analyzed earth observation data and its specific components involved. The command and control center 40 sends a tasking request 41 to the ground station 30, also referred to as base station 30, which is then relayed to the earth observation satellite 10. In contrast to only collecting the raw data and sending it back to the ground station 30 for further processing and analysis, the satellite 10 itself processes the raw data using AI and/or ML algorithms that are run on the raw data to obtain geospatial insights. The analyzed data, i.e. the insights, is then brought to the ground station 30 and the command and control center 40. In this manner, it is possible to considerably reduce the amount of data to be transmitted between the satellite 10 and the ground station 30 as well as between the ground station 30 and the command and control center 40.

In order to provide the required processing and computing capacities on the satellite 10, Graphical Processing Units (GPUs), Tensor Processing Units (TPUs) , specialized Field Programmable Gate Arrays (FPGAs), and the like may be integrated in the satellite 10 such that the AI/ML models and algorithms can run scalably on these computing systems of the satellite 10.

A key aspect of the present invention is to perform an on-demand earth observation processing sequence on the on-board computing unit 16, also referred to as processing unit 16, of a spacecraft 10 and relay the processed result back to a ground station 30 on earth. Fig. 3 now shows an architectural diagram describing the on-board computing system 16, i.e. the processing unit 16, of the satellite 10 implementing the invention.

The computing unit 16 comprises a CPU (Central Processing Unit) 161a together with RAM (Random Access Memory) 161a, a Graphical Processing Unit (GPU) 161c, a Tensor Processing Unit (TPU) 161c, a Field Programmable Gate Array (FPGA) 161c, a communications bus coupling the different units within computing unit 16, etc. The computing unit 16, 161 comprises one or more data storage units 14, 161b. The GPU or TPU or FPGA are configured to accelerate the computation of machine-learning and deep learning models applied on the raw data. Some models (e.g. change detection) may also be directly implemented in an FPGA to reduce computation times. It is possible that all hardware resources are managed by an operating system layer 161d along with the associated device drivers.

The communication unit 12, 162 comprises a satellite communications module 162a that communicates with the ground station 30 for transferring data or commands, i.e. requests. The satellite tasking module 162b tasks the satellite 10 to collect earth observation data, i.e. the raw data, when the satellite 10 passes over a defined area on earth. The earth observation sensing module 162c manages various earth observation sensors on-board the satellite 10, such as optical sensors, radar sensors, etc. These sensors may be part of the above-described detection unit 18 of spacecraft 10.

The modules 163a, 163b, 163c, 163d, 163e in computing module 163 of computing unit 16 as shown in Fig. 3 are exemplary in implementing the method as described with reference to Fig. 4 below. These modules 163a, 163b, 163c, 163d, 163e may typically include software components that run on the on-board computing unit 16 on spacecraft or satellite 10.

The computing module 163 of computing unit 16 comprises an earth observation analytics manager 163a. The analytics manager 163a takes earth observation analytics requests 31 via the satellite communications module 162a, triggers the appropriate earth observation analytics workflows and passes the results back via the satellite communications module 162a. The analytics manager 163a further determines if required workflows and algorithms along with the raw data representing the area of interest are present in the storage unit 14, 161b. Therein, a workflow may be understood as a sequence of algorithmic operations on data to produce a desired result. For example, a car counting workflow may 1) collect data about the area of interest, e.g., one or more raw images, 2) perform ortho-rectification and geo-localization, 3) pan-sharpen the image(s), 4) run a car-detector machine learning algorithm over sections of the image(s), and then compute the total number of cars in the area of interest. Similarly, there may be workflows for oil rig detection, tree canopy detection, change detection, etc.

The computing module 163 of computing unit 16 further comprises a data manager 163d. This module determines if the required raw data about the area of interest is present in the on-board storage unit 14, 161b of the satellite 10. If the required raw data is not present, the data manager 163d triggers satellite tasking module 162b to collect the relevant raw data.

The computing module 163 of computing unit 16 further comprises an algorithms repository 163e that is part of or may be coupled to the storage unit 14, 161b. The algorithms repository 163e comprises a collection of data pre-processing algorithms (geo-localization, ortho-rectification, pan-sharpening, etc.) and earth observation analytics algorithms (e.g. car detection, tree canopy detection, vegetation classification, oil rig detection, etc.). The analytics algorithms may be in the form of standard machine-learning algorithm or model formats like ONNX, Tensor low, etc. The algorithms may also have versions, and there may be multiple versions of the same algorithms in the repository 163e. New algorithms and updates of existing algorithms are performed via the satellite communications module 162a on-demand and/or on a regular basis.

The computing module 163 of computing unit 16 further comprises a workflow manager 163c that creates workflows using building blocks from the algorithms repository 163e, i.e. sequencing a defined number of processing algorithms. The workflow manager 163c also reports on the status of execution of the workflows. It is possible that the storage unit 14, 161b stores multiple processing algorithms which together provide a workflow. It is possible that one or more of these processing algorithms involve a machine-learning algorithm. The computing unit 16, i.e. the processing unit 16, applies this workflow and the machine-learning algorithm on the raw data to process the raw data in order to determine the analyzed earth observation data to be provided in response to receiving the request 31 from the ground station 30.

The computing module 163 of computing unit 16 further comprises a scheduler 163b that schedules workflows for execution on the computing unit 16, monitors their progress, and performs state management. Information about the progress, the performance and the state management of execution of algorithms or workflows may additionally be sent to the ground station 30 to monitor the processing of the raw data on-board the satellite 10.

The following provides an example of a sequence of steps which are performed by the computing unit 16 in an earth observation analytics task:
In a first step, the ground station 30 relays a message (request) describing the area of interest on the earth's surface for which the provision of analyzed earth observation data is desired as well as the earth observation analytics workflow to be performed by the computing unit 16 of the satellite 10.

In a second step, the earth observation analytics manager module 163a on the satellite 10 receives this request via the satellite communications module 162a.

In a third step, the earth observation analytics manager 163a triggers the workflow module 163c which, in response, determines if the required workflow definition is available, for example in the storage unit 14 and/or algorithms repository 163e.

If the workflow definition is not available, the workflow manager 163c requests in a fourth step the workflow details from the ground station 30, via the satellite communications module 162a.

In a fifth step, the workflow manager 163c receives the workflow details and determines if all the algorithmic building blocks (that together form the workflow) with the required versions are present in the storage unit 14 and/or algorithms repository module 163e.

If the algorithms are not present or obsolete, the storage unit 14 and/or algorithms repository module 163e requests in a sixth step the missing algorithms or triggers an update of existing algorithms by communicating with the ground station 30.

In a seventh step, the data manager 163d determines if the required raw data representative for the area of interest on the earth's surface is available on the on-board storage unit 14 and/or algorithms repository module 163e of the satellite 10.

If the raw data is not available, the data manager 163d triggers in an eighth step the satellite tasking module 162b and waits for the raw data to be collected. This may be carried out when the satellite 10 passes over the area of interest on the earth's surface. The satellite 10 may then detect, via the detection unit 18, the raw data, for example image or radar data.

After the data manager 163d confirms that the raw data is available, the scheduler 163b schedules in a ninth step the workflow (raw data and algorithms) for execution.

In a tenth step, the scheduler monitors and manages the workflow execution.

After the workflow is complete, the earth observation analytics manager 163a receives in an eleventh step the results of the earth observation analytics workflow, i.e. the analysed earth observation data, and relays these results back to the ground station 30.

Fig. 4 illustrates a flow diagram for a method of providing analyzed earth observation data from a spacecraft, in particular the spacecraft 10 of Fig. 1. In a step S1 of the method, a request 31 from a ground station 30 is received by the spacecraft 10, wherein the request 31 is representative for a type of analyzed earth observation data to be provided. In a step S2, a first processing algorithm involving a machine-learning algorithm is stored on the spacecraft 10, in particular in storage unit 14 of the spacecraft 10. In another step S3, raw data is obtained by the spacecraft 10, for example by detection unit 18 of the spacecraft 10, wherein the raw data is representative for a state of an area of interest on an earth's surface. In another step S4, the obtained raw data is processed on the spacecraft 10, in particular, in the processing unit 16 of the spacecraft 10, using the first processing algorithm involving the machine-learning algorithm in order to determine the analyzed earth observation data to be provided in response to receiving the request 31 from the ground station. In another step S5, the analyzed earth observation data is sent from the spacecraft, in particular form the communication unit 12 of the spacecraft 10, to the ground station 30.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims. Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

## Claims

1. Spacecraft (10) for providing analyzed earth observation data, comprising:
a communication unit (12) configured to receive a request (31) from a ground station (30), wherein the request (31) is representative for a type of analyzed earth observation data to be provided;
a storage unit (14) configured to store a first processing algorithm involving a machine-learning algorithm;
a processing unit (16) configured to obtain raw data being representative for a state of an area of interest on an earth's surface;
wherein the processing unit (16) is configured to process the obtained raw data using the first processing algorithm in order to determine the analyzed earth observation data to be provided in response to receiving the request (31) from the ground station (30);
wherein the communication unit (12) is configured to send the analyzed earth observation data to the ground station (30);
wherein the request (31) identifies an area of interest on the earth's surface and a predefined processing algorithm to be performed by the processing unit (16);
wherein the processing unit (16) is configured to determine whether the predefined processing algorithm is present in the storage unit (14);
wherein the processing unit (16) is configured to receive the predefined processing algorithm from the ground station (30) if it is determined that the predefined processing algorithm is not present in the storage unit (14).

2. Spacecraft (10) of claim 1,
wherein the communication unit (12) is configured to receive a second processing algorithm;
wherein the processing unit (16) is further configured to process the obtained raw data using the second processing algorithm in order to determine the analyzed earth observation data to be provided.

3. Spacecraft (10) according to any one of the preceding claims,
wherein the communication unit (12) is configured to receive an update program that is adapted to update the first processing algorithm in order to obtain an updated first processing algorithm;
wherein the processing unit (16) is further configured to process the obtained raw data using the updated first processing algorithm in order to determine the analyzed earth observation data to be provided.

4. Spacecraft (10) according to any one of the preceding claims,
wherein the storage unit (14) is configured to store a plurality of processing algorithms that are adapted to determine different analyzed earth observation data;
wherein the processing unit (16) is configured to select an algorithm from the plurality of processing algorithms based on the received request (31).

5. Spacecraft (10) according to any one of the preceding claims,
wherein the processing unit (16) is configured to determine whether the raw data being representative for the state of the area of interest on the earth's surface is present in the storage unit (14).

6. Spacecraft (10) according to claim 5,
wherein the processing unit (16) is configured to control the spacecraft (10) to obtain the raw data being representative for the state of the area of interest on the earth's surface when it is determined that the raw data being representative for the state of the area of interest on the earth's surface is not present in the storage unit (14).

7. Spacecraft (10) according to any one of the preceding claims, comprising
a detection unit (18) configured to capture the raw data being representative for the state of the area of interest on the earth's surface.

8. Spacecraft (10) according to any one of the preceding claims,
wherein the raw data being representative for the state of the area of interest on the earth's surface comprises image data of at least the area of interest on the earth's surface.

9. Spacecraft (10) according to any one of the preceding claims,
wherein the processing unit (16) is configured to pre-process the obtained raw data by using at least one of ortho-rectification, geo-localization and pan-sharpening.

10. Spacecraft (10) according to any one of the preceding claims,
wherein the spacecraft (10) is a satellite.

11. Earth observation system (100), comprising:
a ground station (30); and
a spacecraft (10) according to any one of the preceding claims;
wherein the ground station (30) stores a plurality of processing algorithms;
wherein the ground station (30) is configured to automatically send at least one of the plurality of processing algorithms to the spacecraft (10) based on a determination of the processing unit (16) of the spacecraft (10) that the at least one processing algorithm is not present in the storage unit (14) of the spacecraft (10) and that the at least one processing algorithm is required to determine the analyzed earth observation data on-board the spacecraft (10).

12. Method of providing analyzed earth observation data from a spacecraft (10), comprising:
Receiving, by the spacecraft (10), a request (31) from a ground station (30), wherein the request (31) is representative for a type of analyzed earth observation data to be provided (S1);
Storing, on the spacecraft (10), a first processing algorithm involving a machine-learning algorithm (S2);
Obtaining, by the spacecraft (10), raw data being representative for a state of an area of interest on an earth's surface (S3);
Processing, on the spacecraft (10), the obtained raw data using the first processing algorithm involving a machine-learning algorithm in order to determine the analyzed earth observation data to be provided in response to receiving the request (31) from the ground station (30, S4);
Sending the analyzed earth observation data from the spacecraft (10) to the ground station (30, S5);
wherein the request (31) identifies an area of interest on the earth's surface and a predefined processing algorithm to be performed by the processing unit (16);
wherein the processing unit (16) is configured to determine whether the predefined processing algorithm is present in the storage unit (14);
wherein the processing unit (16) is configured to receive the predefined processing algorithm from the ground station (30) if it is determined that the predefined processing algorithm is not present in the storage unit (14).

## Patentansprüche

1. Raumfahrzeug (10) zum Bereitstellen analysierter Erdbeobachtungsdaten, umfassend:
eine Kommunikationseinheit (12), die konfiguriert ist, eine Anforderung (31) von einer Bodenstation (30) zu empfangen, wobei die Anforderung (31) für einen Typ von analysierten Erdbeobachtungsdaten, die bereitgestellt werden sollen, repräsentativ ist;
eine Speichereinheit (14), die konfiguriert ist, einen ersten Verarbeitungsalgorithmus, der einen Maschinenlernalgorithmus beinhaltet, zu speichern;
eine Verarbeitungseinheit (16), die konfiguriert ist, Rohdaten zu erhalten, die für einen Zustand eines Bereichs von Interesse auf einer Erdoberfläche repräsentativ sind;
wobei die Verarbeitungseinheit (16) konfiguriert ist, die erhaltenen Rohdaten unter Verwendung des ersten Verarbeitungsalgorithmus zu verarbeiten, um die analysierten Erdbeobachtungsdaten, die bereitgestellt werden sollen, als Reaktion auf das Empfangen der Anforderung (31) von der Bodenstation (30) zu bestimmen;
wobei die Kommunikationseinheit (12) konfiguriert ist, die analysierten Erdbeobachtungsdaten an die Bodenstation (30) zu senden;
wobei die Anforderung (31) einen Bereich von Interesse auf der Erdoberfläche und einen vordefinierten Verarbeitungsalgorithmus, der durch die Verarbeitungseinheit (16) durchgeführt werden soll, identifiziert;
wobei die Verarbeitungseinheit (16) konfiguriert ist, zu bestimmen, ob der vordefinierte Verarbeitungsalgorithmus in der Speichereinheit (14) vorhanden ist;
wobei die Verarbeitungseinheit (16) konfiguriert ist, den vordefinierten Verarbeitungsalgorithmus von der Bodenstation (30) zu empfangen, wenn bestimmt wird, dass der vordefinierte Verarbeitungsalgorithmus nicht in der Speichereinheit (14) vorhanden ist.

2. Raumfahrzeug (10) nach Anspruch 1,
wobei die Kommunikationseinheit (12) konfiguriert ist, einen zweiten Verarbeitungsalgorithmus zu empfangen;
wobei die Verarbeitungseinheit (16) ferner konfiguriert ist, die erhaltenen Rohdaten unter Verwendung des zweiten Verarbeitungsalgorithmus zu verarbeiten, um die analysierten Erdbeobachtungsdaten, die bereitgestellt werden sollen, zu bestimmen.

3. Raumfahrzeug (10) nach einem der vorhergehenden Ansprüche,
wobei die Kommunikationseinheit (12) konfiguriert ist, ein Aktualisierungsprogramm zu empfangen, das angepasst ist, den ersten Verarbeitungsalgorithmus zu aktualisieren, um einen aktualisierten ersten Verarbeitungsalgorithmus zu erhalten;
wobei die Verarbeitungseinheit (16) ferner konfiguriert ist, die erhaltenen Rohdaten unter Verwendung des aktualisierten ersten Verarbeitungsalgorithmus zu verarbeiten, um die analysierten Erdbeobachtungsdaten, die bereitgestellt werden sollen, zu bestimmen.

4. Raumfahrzeug (10) nach einem der vorhergehenden Ansprüche,
wobei die Speichereinheit (14) konfiguriert ist, eine Vielzahl von Verarbeitungsalgorithmen zu speichern, die angepasst sind, verschiedene analysierte Erdbeobachtungsdaten zu bestimmen;
wobei die Verarbeitungseinheit (16) konfiguriert ist, einen Algorithmus aus der Vielzahl von Verarbeitungsalgorithmen auszuwählen, basierend auf der empfangenen Anforderung (31).

5. Raumfahrzeug (10) nach einem der vorhergehenden Ansprüche,
wobei die Verarbeitungseinheit (16) konfiguriert ist, zu bestimmen, ob die Rohdaten, die für den Zustand des Bereichs von Interesse auf der Erdoberfläche repräsentativ sind, in der Speichereinheit (14) vorhanden sind.

6. Raumfahrzeug (10) nach Anspruch 5,
wobei die Verarbeitungseinheit (16) konfiguriert ist, das Raumfahrzeug (10) zu steuern, um die Rohdaten zu erhalten, die für den Zustand des Bereichs von Interesse auf der Erdoberfläche repräsentativ sind, wenn bestimmt wird, dass die Rohdaten, die für den Zustand des Bereichs von Interesse auf der Erdoberfläche repräsentativ sind, nicht in der Speichereinheit (14) vorhanden sind.

7. Raumfahrzeug (10) nach einem der vorhergehenden Ansprüche, umfassend
eine Erfassungseinheit (18), die konfiguriert ist, die Rohdaten zu erfassen, die für den Zustand des Bereichs von Interesse auf der Erdoberfläche repräsentativ sind.

8. Raumfahrzeug (10) nach einem der vorhergehenden Ansprüche,
wobei die Rohdaten, die für den Zustand des Bereichs von Interesse auf der Erdoberfläche repräsentativ sind, Bilddaten mindestens des Bereichs von Interesse auf der Erdoberfläche umfassen.

9. Raumfahrzeug (10) nach einem der vorhergehenden Ansprüche,
wobei die Verarbeitungseinheit (16) konfiguriert ist, die erhaltenen Rohdaten unter Verwendung von mindestens einem von Orthorektifikation, Geolokalisierung und Panschärfung vorzuverarbeiten.

10. Raumfahrzeug (10) nach einem der vorhergehenden Ansprüche,
wobei das Raumfahrzeug (10) ein Satellit ist.

11. Erdbeobachtungssystem (100), umfassend:
eine Bodenstation (30); und
ein Raumfahrzeug (10) nach einem der vorhergehenden Ansprüche;
wobei die Bodenstation (30) eine Vielzahl von Verarbeitungsalgorithmen speichert;
wobei die Bodenstation (30) konfiguriert ist, automatisch mindestens einen der Vielzahl von Verarbeitungsalgorithmen an das Raumfahrzeug (10) zu senden, basierend auf einer Bestimmung der Verarbeitungseinheit (16) des Raumfahrzeugs (10), dass der mindestens eine Verarbeitungsalgorithmus nicht in der Speichereinheit (14) des Raumfahrzeugs (10) vorhanden ist und dass der mindestens eine Verarbeitungsalgorithmus erforderlich ist, um die analysierten Erdbeobachtungsdaten an Bord des Raumfahrzeugs (10) zu bestimmen.

12. Verfahren zum Bereitstellen analysierter Erdbeobachtungsdaten von einem Raumfahrzeug (10), umfassend:
Empfangen, durch das Raumfahrzeug (10), einer Anforderung (31) von einer Bodenstation (30), wobei die Anforderung (31) für einen Typ von analysierten Erdbeobachtungsdaten, die bereitgestellt werden sollen, repräsentativ ist (S1);
Speichern, auf dem Raumfahrzeug (10), eines ersten Verarbeitungsalgorithmus, der einen Maschinenlernalgorithmus beinhaltet (S2);
Erhalten, durch das Raumfahrzeug (10), von Rohdaten, die für einen Zustand eines Bereichs von Interesse auf einer Erdoberfläche repräsentativ sind (S3);
Verarbeiten, auf dem Raumfahrzeug (10), der erhaltenen Rohdaten unter Verwendung des ersten Verarbeitungsalgorithmus, der einen Maschinenlernalgorithmus beinhaltet, um die analysierten Erdbeobachtungsdaten, die bereitgestellt werden sollen, als Reaktion auf das Empfangen der Anforderung (31) von der Bodenstation zu bestimmen (30, S4);
Senden der analysierten Erdbeobachtungsdaten von dem Raumfahrzeug (10) an die Bodenstation (30, S5);
wobei die Anforderung (31) einen Bereich von Interesse auf der Erdoberfläche und einen vordefinierten Verarbeitungsalgorithmus, der durch die Verarbeitungseinheit (16) durchgeführt werden soll, identifiziert;
wobei die Verarbeitungseinheit (16) konfiguriert ist, zu bestimmen, ob der vordefinierte Verarbeitungsalgorithmus in der Speichereinheit (14) vorhanden ist;
wobei die Verarbeitungseinheit (16) konfiguriert ist, den vordefinierten Verarbeitungsalgorithmus von der Bodenstation (30) zu empfangen, wenn bestimmt wird, dass der vordefinierte Verarbeitungsalgorithmus nicht in der Speichereinheit (14) vorhanden ist.

## Revendications

1. Engin spatial (10) pour fournir des données d'observation terrestre analysées, comprenant:
une unité de communication (12) configurée pour recevoir une demande (31) d'une station au sol (30), dans lequel la demande (31) est représentative d'un type de données d'observation terrestre analysées à fournir;
une unité de stockage (14) configurée pour stocker un premier algorithme de traitement impliquant un algorithme d'apprentissage automatique;
une unité de traitement (16) configurée pour obtenir des données brutes représentatives d'un état d'une zone d'intérêt sur une surface terrestre;
dans lequel l'unité de traitement (16) est configurée pour traiter les données brutes obtenues en utilisant le premier algorithme de traitement afin de déterminer les données d'observation terrestre analysées à fournir en réponse à la réception de la demande (31) de la station au sol (30);
dans lequel l'unité de communication (12) est configurée pour envoyer les données d'observation terrestre analysées à la station au sol (30);
dans lequel la demande (31) identifie une zone d'intérêt sur la surface terrestre et un algorithme de traitement prédéfini à exécuter par l'unité de traitement (16);
dans lequel l'unité de traitement (16) est configurée pour déterminer si l'algorithme de traitement prédéfini est présent dans l'unité de stockage (14);
dans lequel l'unité de traitement (16) est configurée pour recevoir l'algorithme de traitement prédéfini de la station au sol (30) s'il est déterminé que l'algorithme de traitement prédéfini n'est pas présent dans l'unité de stockage (14).

2. Engin spatial (10) selon la revendication 1,
dans lequel l'unité de communication (12) est configurée pour recevoir un second algorithme de traitement;
dans lequel l'unité de traitement (16) est en outre configurée pour traiter les données brutes obtenues en utilisant le second algorithme de traitement afin de déterminer les données d'observation terrestre analysées à fournir.

3. Engin spatial (10) selon l'une quelconque des revendications précédentes,
dans lequel l'unité de communication (12) est configurée pour recevoir un programme de mise à jour qui est adapté pour mettre à jour le premier algorithme de traitement afin d'obtenir un premier algorithme de traitement mis à jour;
dans lequel l'unité de traitement (16) est en outre configurée pour traiter les données brutes obtenues en utilisant le premier algorithme de traitement mis à jour afin de déterminer les données d'observation terrestre analysées à fournir.

4. Engin spatial (10) selon l'une quelconque des revendications précédentes,
dans lequel l'unité de stockage (14) est configurée pour stocker une pluralité d'algorithmes de traitement qui sont adaptés pour déterminer différentes données d'observation terrestre analysées;
dans lequel l'unité de traitement (16) est configurée pour sélectionner un algorithme parmi la pluralité d'algorithmes de traitement sur la base de la demande reçue (31).

5. Engin spatial (10) selon l'une quelconque des revendications précédentes,
dans lequel l'unité de traitement (16) est configurée pour déterminer si les données brutes représentatives de l'état de la zone d'intérêt sur la surface terrestre sont présentes dans l'unité de stockage (14).

6. Engin spatial (10) selon la revendication 5,
dans lequel l'unité de traitement (16) est configurée pour commander l'engin spatial (10) pour obtenir les données brutes représentatives de l'état de la zone d'intérêt sur la surface terrestre lorsqu'il est déterminé que les données brutes représentatives de l'état de la zone d'intérêt sur la surface terrestre ne sont pas présentes dans l'unité de stockage (14).

7. Engin spatial (10) selon l'une quelconque des revendications précédentes, comprenant:
une unité de détection (18) configurée pour capturer les données brutes représentatives de l'état de la zone d'intérêt sur la surface terrestre.

8. Engin spatial (10) selon l'une quelconque des revendications précédentes,
dans lequel les données brutes représentatives de l'état de la zone d'intérêt sur la surface terrestre comprennent des données d'image d'au moins la zone d'intérêt sur la surface terrestre.

9. Engin spatial (10) selon l'une quelconque des revendications précédentes,
dans lequel l'unité de traitement (16) est configurée pour prétraiter les données brutes obtenues en utilisant au moins l'une parmi l'orthorectification, la géolocalisation et le Pan-sharpening.

10. Engin spatial (10) selon l'une quelconque des revendications précédentes,
dans lequel l'engin spatial (10) est un satellite.

11. Système d'observation terrestre (100), comprenant :
une station au sol (30); et
un engin spatial (10) selon l'une quelconque des revendications précédentes;
dans lequel la station au sol (30) stocke une pluralité d'algorithmes de traitement;
dans lequel la station au sol (30) est configurée pour envoyer automatiquement au moins l'un de la pluralité d'algorithmes de traitement à l'engin spatial (10) sur la base d'une détermination de l'unité de traitement (16) de l'engin spatial (10) que l'au moins un algorithme de traitement n'est pas présent dans l'unité de stockage (14) de l'engin spatial (10) et que l'au moins un algorithme de traitement est requis pour déterminer les données d'observation terrestre analysées à bord de l'engin spatial (10).

12. Procédé de fourniture de données d'observation terrestre analysées à partir d'un engin spatial (10), comprenant:
la réception, par l'engin spatial (10), d'une demande (31) d'une station au sol (30), dans lequel la demande (31) est représentative d'un type de données d'observation terrestre analysées à fournir (S1);
le stockage, sur l'engin spatial (10), d'un premier algorithme de traitement impliquant un algorithme d'apprentissage automatique (S2);
l'obtention, par l'engin spatial (10), de données brutes représentatives d'un état d'une zone d'intérêt sur une surface terrestre (S3);
le traitement, sur l'engin spatial (10), des données brutes obtenues en utilisant le premier algorithme de traitement impliquant un algorithme d'apprentissage automatique afin de déterminer les données d'observation terrestre analysées à fournir en réponse à la réception de la demande (31) de la station au sol (30, S4);
l'envoi des données d'observation terrestre analysées de l'engin spatial (10) à la station au sol (30, S5);
dans lequel la demande (31) identifie une zone d'intérêt sur la surface terrestre et un algorithme de traitement prédéfini à exécuter par l'unité de traitement (16);
dans lequel l'unité de traitement (16) est configurée pour déterminer si l'algorithme de traitement prédéfini est présent dans l'unité de stockage (14);
dans lequel l'unité de traitement (16) est configurée pour recevoir l'algorithme de traitement prédéfini de la station au sol (30) s'il est déterminé que l'algorithme de traitement prédéfini n'est pas présent dans l'unité de stockage (14).
